# EUROPEAN PATENT APPLICATION

(11) **EP 0 818 154 A1**
(43) Date of publication of application: **14.01.1998**
(21) Application number: 96201924.6
(22) Date of filing: 09.07.1996
(51) Int. Cl.: A23P 1/12, A23G 9/28, A23G 3/20, B29C 47/04, A23K 1/00, A23L 1/16

(54) **Marbled extruded food product**

(71) Applicant: SOCIETE DES PRODUITS NESTLE S.A., 1800 Vevey (CH)
(72) Inventor: Baldoni, Johnny Frank, 84025 Eboli (SA) (IT); Farnsworth, John, St. Joseph, MO 65406 (US); Hauser, Thomas Wilhelm, 84025 Eboli (SA) (IT); Aebli, Gaudenz Diegtegen, 8404 Winterthur (CH); Schatz, Hans, 8157 Dielsdorf (CH)

(57) **Abstract**

A process and an apparatus for partially mixing fluid food substances, the process comprising; segmenting a flow of a major fluid substance into a plurality of fluid substance streams travelling substantially in parallel in close proximity; introducing discontinuously a flow of a colored fluid food additive into the flow of the major fluid substance at one or more points between the fluid substance streams to obtain a combined flow; and mixing the combined flow sufficiently to enable the production of mixture having a marbled appearance.

## Description

The present invention relates to a process for partially mixing fluid substances so that the end product presents a marble appearance. The invention relates also to an apparatus for use in the present process.

### State of the art

US4358468 discloses a process for preparing a marbled meat pet food comprising, pressure casting a first ingredient phase simulating lean meat into an elongated rectangular form; pressure casting a second ingredient phase simulating fat into the elongated rectangular form of the first ingredient phase, urging the combined casting through an enclosed blending compartment having oriented therein a plurality of stationary elements, plurality of stationary elements which cut, divide and axially rotate substantial portions of the casting in a manner to randomly blend the first and second phases without altering the outlying physical dimensions of the casting, and simultaneously maintaining a pressure within said blending compartment from about 250 to 400 psig sufficient to bind the phase together thereby converting the casting to that of a casting of randomly blended first and second ingredient phases; heat setting the casting of blended ingredient phases to blend the phases together and to form a structurally stable material; and subdividing and shaping the heat set casting of blended phases into small pieces resembling small cuts of lean meat marbled with fat.

EP 665051 discloses another process for mixing fluid substances, the process comprising; segmenting a flow of a major fluid substance into a plurality of fluid substance streams travelling substantially in parallel in close proximity; introducing a flow of a fluid additive into the flow of the major fluid substance at one or more points between the fluid substance streams to obtain a combined flow; and mixing the combined flow. This process is particularly adapted for homogeneously mixing fluid substances which have differing viscosities.

It is an object of this invention to provide a new process for partially mixing fluid substances of differing viscosities and colors which enables a marbled mixture to be obtained.

### Summary of the invention

Accordingly, in one aspect this invention provides a process for partially mixing fluid food substances, the process comprising: segmenting a flow of a major fluid substance into a plurality of fluid substance streams travelling substantially in parallel in close proximity; introducing discontinuously a flow of a colored fluid additive into the flow of the major fluid substance at one or more points between the fluid substance streams to obtain a combined flow; and mixing the combined flow sufficiently to enable the production of a mixture having a marbled appearance.

In another aspect, this invention provides an apparatus for partially mixing fluid food substances, the apparatus comprising; segmenting means to segment a flow of a major fluid substance into a plurality of fluid substance streams travelling substantially in parallel and in close proximity; and inlet means associated with the segmenting means to introduce colored fluid additive into the flow of the major fluid substance at one or more points between the fluid substance streams to obtain a combined flow; and a mixer to mix the combined flow sufficiently to enable the production of a mixture having a marbled appearance; said inlet means introducing discontinuously the colored fluid additive.

The invention is also directed to any marbled pasta having the appearance of a pasta obtained according to the present invention.

Finally, the invention concerns also the use of a food flow comprising fluid substance streams travelling substantially in parallel in close proximity, said streams being surrounded by a colored fluid food additive, to make a food product having a marbled appearance.

Surprisingly, by introducing the additive into the gaps between the streams of the major fluid substance, tunnelling of the additive during the subsequent mixing step is avoided to a large extent. Hence high intensity mixing is not required; for example the combined flow may be mixed in a static mixer which does not impart significant shear forces on the fluid substances. This is of particular advantage in the processing of shear-sensitive substances such as extrusion-cooked food compositions.

Moreover, it has been found that the introduction of a colored fluid food additive, discontinuously, in fact increases the marbled appearance of the mixture.

Another advantage of the discontinuous and consecutive introduction of a colored fluid additive by the mixing assemblies, is that the intensity required to introduce a sufficient amount of additive may be less if all mixing assemblies introduce the additive constantly, that is to say in the together.

Furthermore, this avoids that the possibility that the additive may take a preferred way, and that one of the mixing assemblies may then receive more additive than the other(s).

### Detailed description of the invention

In the present invention, the term "discontinuously" means that the introduction or injection of the additive in the fluid substance is not constant, and may be interrupted regularly or not.

Likewise, the term "consecutively" means that each mixing assembly receives in its turn the additive to be introduced. The introduction order of the additive, among the mixing assemblies, is a matter of choice by the skilled person. Preferably, each mixing assembly receives the same amount of additive, during a same given period, the interruption time being substantially equivalent for each mixing assembly.

This interruption time depends in fact largely on the extrusion flow speed. If the process is applied for the preparation of marbled pasta, the additive is preferably injected into the segmented flow having a speed of 1-7 meter(s)/min, during 0,5-10 second(s), the injection being interrupted sequentially during 1-60 second(s).

In the process according to the invention, the combined flow may be mixed by passing it through static mixers. In this way, mechanical shear and pressure drop may be minimised. However, attention should be paid to the mixing intensity. The mixing should thus be sufficient to enable the production of a mixture having a marbled appearance, but not too intense to avoid a complete homogenisation of the combined flow.

When static mixers, for example, are employed, such should be selected for effecting objectives of maximal open area for flow and of minimal length to minimise pressure drop, while achieving a desired degree of mixing and, as the open area increases and the length decreases, shear stress caused by mixing is reduced. As will be appreciated, for high viscosity ranges it is preferable the mixers be suitable for mixing high viscosity fluids having laminar flows, such mixers preferably having multi-layers to split and recombine the substance/additive flow, such mixers, as are known in the art, including those such as the Koch mixers described in Chemical Engineering Progress, June 1991 pp. 32-38, and the like.

The mixing process may be performed using a major fluid substance and an additive having a viscosity ratio of major fluid substance to additive of up to about 700000:1 and, in particular, of from about 20000:1 to about 1:1. For example, if the process is carried out for making marbled pasta, the additive may be a colored water having a viscosity 700000 times lower than the pasta flow, or the additive may be another colored pasta flow having the same viscosity as that of the major pasta flow.

The major fluid substance may be any of various food compounds and food compositions which are a fluid, or which may be fluidized. Therefore the major fluid substance may be one of a variety of plasticizable substances, including extrudate material. Preferably the viscosity of the major fluid substance is comprised between 0,001 to 60000 Pascal time second (Pa.s), preferably 0,02-6000 Pa.s.

Examples of preferred fluid substances which may be processed include food compositions which tend to set upon being processed with heat and pressure, such as by extrusion-cooking, and which are affected adversely by mechanical shear. These food compositions include amylaceous/farinaceous products, fibre products, and starch and protein-based products. Examples of these products include breakfast cereals, cereal and/or vegetable and/or fruit-based snack foods, texturized vegetable protein products, pastas, cereals and/or protein based pet foods, ice creams, and the like, whether or not produced by extrusion.

The major fluid substance may have a moisture content which contributes to the product being sensitive to mechanical shear. For example, extrusion-cooked food substances which have a moisture content of from about 5% to about 70% by weight, preferably 20-40%, will exhibit this characteristic.

The process may also be applied in any process to make marbled extruded ice cream.

Any of a variety of compounds and compositions may be used as the colorant food additive, the criterion being that additive be in a fluid form. The additive may be a liquid, a gas, a dispersion, a suspension, a dough, and the like, the color being however different from that of the major fluid.

Preferably the viscosity of the additive may range from less than about 0,001-6000 Pa.s. In food applications, typical additives include colorants, agents for adjusting texture and/or density of the food product, flavourants, amortising agents, lipids and glycerides including fats and oils and fatty acids, fat substitutes, gums including guar and xanthan gums, food-acceptable gases, Maillard reaction products, dough and the like.

A further advantage of the process is that the lipid content of extruded products may be manipulated and increased. Usually, if the fluid substance is an extruded amylaceous, farinaceous, or proteinaceous product, the content of added lipid may not be more than about 5% to 6% by weight of the product (up to about 12 to 14% total fat content). Lipids act as extrusion lubricants and hence, at higher levels, tend to affect the extrusion process adversely. Moreover, incorporation of further lipids into an already extruded product is problematic. However the process permits the addition of lipids as additives into extruded fluid substances in an amount in excess of from about 5% to 6%, so as to give a total lipid content of about 20% to about 40% by weight.

The ratio of the major fluid substance and the food additive is preferably in the range of 100:1 to 1:1, for example 100:1 to 50:1.

The process may further comprise partitioning a flow of the major fluid substance into a plurality of partitioned flows, at least one of the partitioned flows being segmented as defined above. Preferably all of the partitioned flows are segmented as defined above. This provides the advantage that the major fluid substance may be separated and processed into a plurality of different products. The products may differ in the additive added, the level of mixing, the shape of the product, and the like. For example, the process may further comprise passing the combined flow obtained from each partitioned stream through a die. If different shapes are desired, different dies may be used.

Another advantage of the process is that, in the processing of cooked and extruded foods, the additives are added after cooking and extrusion. Hence additives which may be sensitive to heating and otherwise could not be used, may be used.

In the apparatus according to the invention, the segmenting means comprises preferably a plate having two opposing faces and having a plurality of passages through it, the openings of the passages having an area making up from about 20% to about 60% of the total area of the face which comes in contact with the fluid substance and additive. Preferably, each opening has an area of about 4 mm² to about 50% of total area of all openings combined.

A radial bore formed within the plate and extending from the outer edge of the plate and terminating in an opening which is substantially centrally disposed with respect to the face of the plate, as described in EP665051, is not appropriate, since it will increase the pressure and the shear of the flow.

The apparatus comprises at least two mixing assemblies each connected to a common distribution means for distributing the first fluid substance, for example equally, between the mixing assemblies. Preferably, each inlet means of each mixing assembly is connected to an additive batch, said additive being pushed up to the inlets by mean of a pump, and said inlets being connected with a valve to permit a consecutive distribution of the additive over the mixing assemblies.

The apparatus may further comprise a die plate connected to the mixing assembly for the production of shaped products. The die plates may have dies which differ from one another as desired. Preferably all the die plates are carried in a single retainer plate. A cutter may be connected after each die plate. The die plates may be in the form of removable inserts in the retainer plate that may be exchanged as desired.

Instead of a cutter after each die plate, a single cutter may be used to cut product leaving each die plate.

The apparatus therefore enables the simultaneous production of different products form a single flow of a major fluid substance. This is a major advantage of the apparatus.

Embodiments of the invention are now described, by way of example only, with reference to the drawings. Percentages are given by weight, otherwise stated.
- Figure 1: is a partially exploded, perspective view of the die assembly;
- Figure 2: is a cross-section of part of the die assembly;
- Figure 3: is a front view of a segmenting plate;
- Figure 4: is a perspective view of extruded material and additive leaving the segmenting plate.

Referring to the figures, the die assembly, generally designated as 10, is positioned downstream of an extruder die head 12. The extruder used upstream of the die assembly 10 is not critical and any suitable extruder may be used. Clearly, the extruder must be such to generate sufficient pressure to cause flow of extrudate through the die assembly 10. Examples of suitable extruders include single and twin screw extruders obtainable from manufacturers including Werner & Pfleiderer, Wenger, Sano, Leistritz, Er-We-Pa, Clextral and Buhler. For amylaceous/farinaceous and proteinaceous products, twin screw extruders are preferred.

The die assembly 10 has six passages 28 through it, each passage 28 being equally spaced. Six passages 28 are shown merely for the purposes of illustration; any suitable number (for example 4 or 8) may be provided.

Either or both of the die head 12 and die assembly 10 may be sleeved to fit slidably together or may simply abut one another. The die head 12 and die assembly 10 may be connected by suitable means such as bolts or brackets and the like, for example.

Six circular segmentation plates 40 are put into the six passages 28, and maintained firmly by two gasket rings 200 and an annular shoulder portion 100. Alternatively the segmentation plates may be integral with the passages 28.

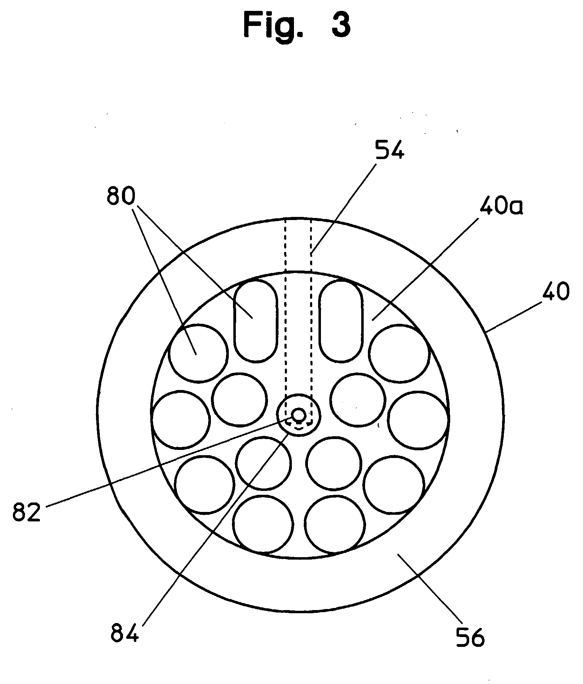

As best illustrated in figure 3, each segmentation plate 40 has a plurality of passages 80 through it, the passages 80 being aligned substantially parallel to the axis of the segmentation plate 40. The passages 80 may be spaced irregularly across the segmentation plate 40 and may vary in shape. The downstream face 40a includes an outer annular shoulder portion 56; the outermost passages 80 being spaced a distance radially inwardly of the shoulder portion 56. The portion of the downstream face 40a radially inwardly of the shoulder portion is the portion which contacts the fluid substances and additives. An additive bore 54 extends radially from the axis of the segmentation plate 40 to the circumferential edge of the segmentation plate 40. A central passage 82 extends from the downstream face 40a of the segmentation plate 40 to the additive bore 54. An additive feed line 52 is connected to the additive bore 54, to a suitable pump for injecting the additive, and to a valve 300 for distributing discontinuously the additive. A nozzle 84, comprising the central passage 82, extends along the axis of the segmentation plate 40.

Preferably, the passages 80 passing through the segmentation plate 40 do not intersect with either the additive bore 54 or nozzle 84. Alternatively, in place of the additive bore 54, a radially extending pipe could be secured to the downstream face 40a to have an exit positioned at a substantially centrally disposed portion of the downstream face 40a. If desired, the segmentation plate 40 may have more than one additive bore 54; the outlets to the additive bores 54 being spaced across the face 40a of the segmentation plate 40.

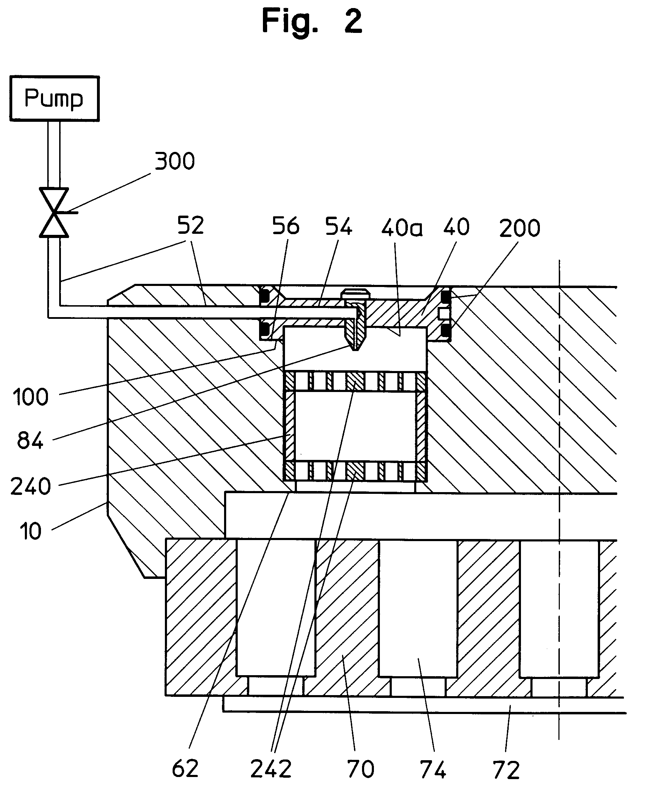

Turning back to figure 2, two static mixers 242 separated by an annular tube 240, may be used, the distance between the two static mixers being chosen to enable a partially homogenisation of the combined flow. These static mixers are simply maintained stable against an annular portion 62 of the die assembly 10, by the pressure of the flow coming from the segmentation plate 40.

The static mixers 242 are selected to provide maximal open area for flow and minimal length to minimise pressure drop and shear, while achieving a desired degree of mixing. Since the viscosity of the major fluid substance is likely to be high, it is preferred that the static mixers 242 be suitable for mixing high viscosity fluids having laminar flows. Examples of static mixers 242 of this type have multi-layers to split and recombine the substance flowing through them. Static mixers of this type are commercially available, for example the Koch mixers described in Chemical Engineering Progress, June, 1991 pp. 32-28. Top obtain very good marbled shapes of the final mixture, static mixers consisting of a plate with a plurality of passages (as described for the segmentation plate 40) may be simply used.

The die assembly 10 is connected to a single die plate 70 having die apertures 74 of a desired shape. A cutter 72 rotates on the die plate 70 to cut product leaving the die apertures 74. Die plates 70 may be fixed in each aperture at the end of the passages 28, and the cutter 72 may be also replaced by a cutter for each die plate 70, for example.

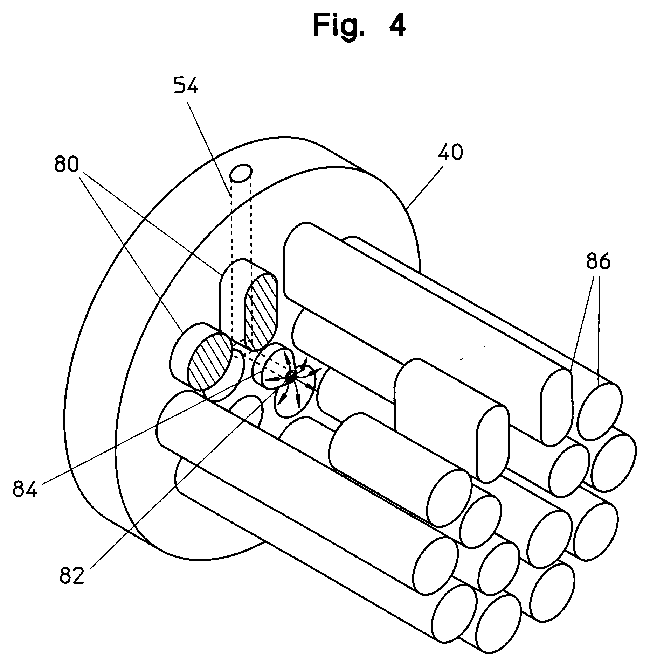

In use, the major fluid substance leaving the extruder enters into the die head 12. The substance is then forced into the passages 28 through and into the segmentation plates 40. The substance then flows through the passages 80 and through the segmentation plates 40. This causes the flow of substance passing through each segmentation plate 40 to form a matrix of separate flow streams 86. This is best illustrated in figure 4.

An additive is pumped through the additive bore 54 to enter at the centre of the matrix of separate flow streams 86. Here the additive tends to eddy and percolate between the flow streams 86 dispersing the additive. Further, it has been found that the additive runs outwardly to some extent along the face 40a of the segmentation plate 40. This assists in distributing the additive throughout the flow streams 86.

To limit a complete further homogenisation of the additive, the number of passages 80 through the segmentation plates 40 should preferably not be too high. Preferably, each opening has an area of about 4 mm² to about 50% of total area of all openings combined, for example.

Further, the outlet openings of all passages 80 combined makes up about 20% to 70%, for example from about 40% to about 50%, of the total cross-sectional area of the plate face 40a which is in contact with the fluid substance and additive. As the size of each passage 80 and the total area of the passage openings is increased, the pressure drop across the segmentation plate 40 decreases. Therefore, the number of the passages 80 and their size should be optimised for any application; taking into account the structural integrity of the segmentation plate 40, the materials being mixed and acceptable pressure drops.

The sizes of the central passage 82 and of the additive bore 54 are such that sufficient additive may readily be introduced.

The additives may be water-soluble and added in the form of aqueous or oil solutions, emulsions or may be dispersions and suspensions having a solids concentration of from, for example, about 1% to about 10%, by weight. More than one additive may be added at the same time. The valves 300 inject the additive consecutively into each mixing assembly during 2 secondes (no injection during 10 secondes for each mixing assembly). These conditions are shown merely for purposes of illustration; any suitable injection conditions may be provided. Further the additive may be heated prior to being added if the major fluid substance is heated to minimise thermal shock.

The following examples are presented for illustrative purposes only.

### Example 1

Dry ground corn and wheat, animal meat meal, minerals, vitamins, fat and salt are combined in amounts conventionally employed to prepare a dry extrusion-cooked pet food. As conventional, the ingredients are ground and then treated with steam and water to heat and moisten the mix. The treated mix has a temperature of about 90°C and a moisture content of about 23%.

The treated mixture is introduced into a co-rotating twin-screw extruder heated to provide temperatures of up to 120°C. A pressure of about 50 bar is generated in the extruder as the mix is kneaded and moves downstream in the extruder.

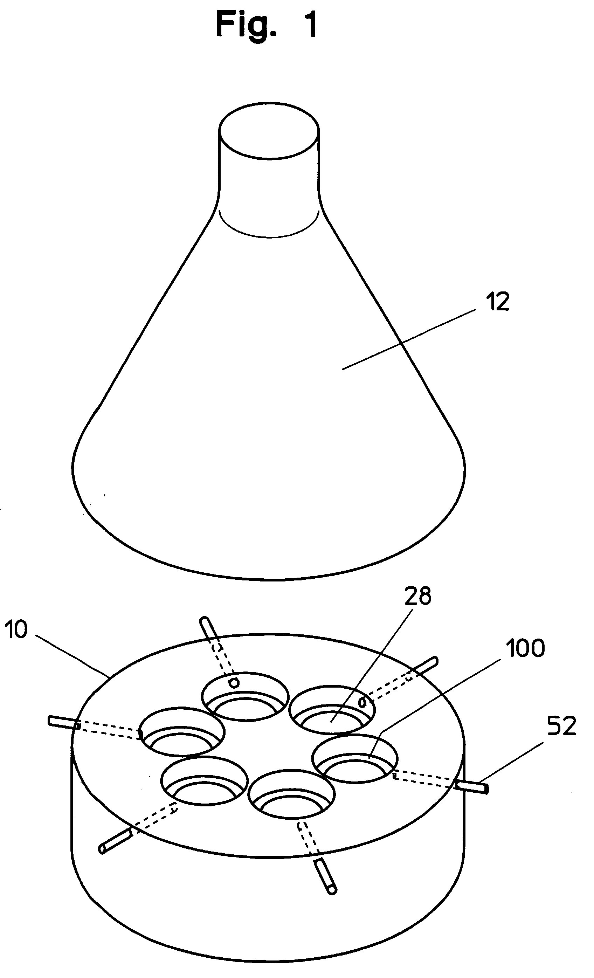

A die assembly 10 as illustrated in figures 1 to 4 is connected to the discharge end of the extruder, with the difference that a die plate 70 is connected to the aperture of each passage 28.

The extruded material is partitioned into 6 separate streams (passages 28). A solution of a red colorant having a solids concentration of about 2% by weight is heated to about 90°C and then pumped under pressure into two segmentation plates 40, the colorant being distributed consecutively every 2 seconds into these two segmentation plates (no injection during 2 seconde in each segmentation plate). Tallow is heated to about 55°C and then pumped under pressure into two other segmentation plates 40, the tallow being distributed consecutively every 2 seconds into these two segmentation plates. Under the same conditions, a solution containing a yellow colorant and a chicken flavourant is fed under pressure into the last two segmentation plates 40.

The proportion of colorant in each separate stream is adjusted to 0,2% by weight. The combined flow is then passed through static mixers to enable the production of a mixed combined flow having marbled appearance. The mixed combined flow is passed through dies having differing shapes, and the extruded product from each die is cut to differing lengths by separately operated cutters. The cut products are dried to a moisture content which provides for a product which is microbiologically stable.

### Example 2

A pasta dough is prepared conventionaly with semolina and water, the dough having a moisture content of about 30-32% by weight

The treated mixture is introduced into a single-screw extruder cooled to provide temperatures of up to 50°C. A pressure of about 110 bar is generated in the extruder as the mix is kneaded and moves downstream in the extrusion head.

A die assembly 10 as illustrated in figures 1 to 4 is connected to the discharge end of the extrude.

The extruded material is partitioned into 6 separate streams (passages 28). A solution of a paprika in sunflower oil (250 Pa.s) is then pumped under pressure into three segmentation plates 40, the colorant being distributed consecutively every 2 seconds into these two segmentation plates (no injection during 2 seconds in each segmentation plate). Under the same conditions, a spinach extract (300 Pa.s) is fed under pressure into the last three segmentation plates 40.

The proportion of colorant in each separate stream is adjusted to 0,1% by weight. The combined flow is then passed through static mixers to enable the production of a mixed combined flow having marbled appearance. The mixed combined flow is passed through a die plate 70, and the extruded product is cut. The cut products are dried to a moisture content which provides for a pasta which is microbiologically stable.

## Claims

1. A process for partially mixing fluid food substances, the process comprising:
segmenting a flow of a major fluid substance into a plurality of fluid substance streams travelling substantially in parallel in close proximity; introducing discontinuously a flow of a colored fluid food additive into the flow of the major fluid substance at one or more points between the fluid substance streams to obtain a combined flow; and mixing the combined flow sufficiently to enable the production of mixture having a marbled appearance.

2. A process according to claim 1 further comprising, prior to segmenting the major fluid substance, partitioning the major fluid substance into a plurality of partitioned flows and segmenting at least one of the partitioned flows.

3. A process according to claim 1 in which, the additive is injected into the segmented flow having a speed of 1-7 meter(s)/min, during 0,5-10 second(s), the injection being interrupted sequentially during 1-60 second(s).

4. A process according to claim 1 in which, the ratio of the major fluid substance and the food additive is in the range of 2000:1 to 1:1.

5. An apparatus for partially mixing fluid food substances, the apparatus including at least one mixing assembly comprising:
segmenting means to segment a flow of a major fluid substance into a plurality of fluid substance streams travelling substantially in parallel and in close proximity; and inlet means associated with the segmenting means to introduce a colored fluid additive into the flow of the major fluid substance at one or more points between the fluid substance streams to obtain a combined flow; and a mixer to mix the combined flow sufficiently to enable the production of a mixture having a marbled appearance; said inlet means introducing discontinously the colored fluid additive.

6. An apparatus according to claim 5 comprising at least two mixing assemblies, said mixing assemblies introducing the colored fluid additive consecutively.

7. An apparatus according to claim 5 in which the segmenting means comprises a plate having two opposing faces and having a plurality of passages though it, each opening having an area to about 4 mm² to about 50% of total area of all openings combined.

8. An apparatus according to claim 5, in which the additive is injected by the inlet means into the segmented flow having a speed of 1-7 meter(s)/min, during 0,5-10 second(s), the injection being interrupted sequentially during 1-60 second(s).

9. An apparatus according to claim 5, including groups of mixing assemblies working independently, each group comprising mixing assemblies introducing consecutively an additive into the segmented flow.

10. A marbled pasta obtainable from the process according to any claim 1 to 4.

11. The use of a food flow comprising fluid substance streams travelling substantially in parallel in close proximity, said streams being surrounded by a colored fluid food additive, to make a food product having a marbled appearance.
